# EUROPÄISCHE PATENTSCHRIFT

(11) **EP 2 621 710 B1**
(45) Veröffentlichungstag und Bekanntmachung des Hinweises auf die Patenterteilung: **15.07.2015**
(21) Anmeldenummer: 11755323.0
(22) Anmeldetag: 09.09.2011
(51) Int. Cl.: B29C 65/08, B06B 3/00

(54) **ULTRASCHALLSCHWINGEINHEIT**
ULTRASONIC VIBRATION UNIT
UNITÉ ÉMETTRICE D'ULTRASONS

(30) Priorität: 27.09.2010 DE 102010041432
(43) Veröffentlichungstag der Anmeldung: 07.08.2013
(73) Patentinhaber: Robert Bosch GmbH, 70442 Stuttgart (DE)
(72) Erfinder: THAERIGEN, Jan, CH-8224 Löhningen (CH)
(86) Internationale Anmeldenummer: PCT/EP2011/065669
(87) Internationale Veröffentlichungsnummer: WO 2012/048968

(56) Entgegenhaltungen:
- WO-A1-2009/156207
- US-A1- 2002 189 206
- US-A1- 2003 155 403
- US-A1- 2005 034 820
- US-A1- 2009 283 570

## Beschreibung

### TECHNISCHES GEBIET

Die vorliegende Erfindung betrifft eine Ultraschallschwingeinheit für eine Ultraschallschweissvorrichtung zum Siegeln und Schweissen von Materialbahnen, mit einer mit einem Konverter verbundenen Sonotrode mit wenigstens einem radial von einer Rotationsachse abragenden, um die Rotationsachse drehbaren Siegelhorn mit einem eine Siegelfläche bildenden freien Ende.

### STAND DER TECHNIK

Das Ultraschallschweissen ist ein Verfahren zum Fügen von Kunststoffen. Ultraschall ist eine mechanische Schwingung oberhalb der Hörgrenze. Der Frequenzbereich beginnt bei etwa 20 kHz und erstreckt sich bis zu Frequenzen von 1 GHz. Solche Ultraschallfrequenzen werden häufig mit Hilfe von piezoelektrischen Schallwandlern (Konverter) aus elektrischer Energie erzeugt. Diese mechanische Schwingungsenergie wird über die mit dem Konverter, gegebenenfalls über ein Amplitudentransformationsstück (Booster) verbundene Sonotrode, auf das Werkstück bzw. das zu bearbeitende Material aufgebracht. Die Fläche der Sonotrode, die dafür vorgesehen ist, mit dem zu bearbeitenden Material in Kontakt zu treten, wird auch als Siegelfläche bezeichnet.

Die Ultraschallschwingeinheit stellt somit ein im Betrieb schwingendes Gebilde dar und besteht aus dem Konverter, gegebenenfalls dem Amplitudentransformationsstück und der Sonotrode.

Um die Ultraschallschwingung mit Hilfe der Ultraschallschwingeinheit effektiv zu übertragen, ist es notwendig, die Ultraschallschwingeinheit in eine Resonanz zu bringen. Abhängig von dem Aufbau der Ultraschallschwingeinheit weist diese eine Vielzahl von Eigenfrequenzen auf. Nur wenn der Konverter eine Eigenfrequenz der Ultraschallschwingeinheit erzeugt, kommt es zu einer resonanten Schwingung der Ultraschallschwingeinheit. Daher müssen Konverter und Ultraschallschwingeinheit aufeinander abgestimmt werden.

Genau genommen unterscheidet sich die Resonanzfrequenz etwas von der Eigenfrequenz, da jedes reale System gedämpft ist. Im folgenden werden jedoch - wie auch häufig in der Literatur - die Begriffe Resonanzfrequenz und Eigenfrequenz synonym benutzt. Die wichtigste Eigenfrequenz der Ultraschallschwingeinheit ist im allgemeinen die Eigenfrequenz, bei der sich in der Ultraschallschwingeinheit eine stehende Longitudinalschwingung mit Wellenknoten und Wellenbäuchen ausbildet. Dabei bildet sich an den stirnseitigen Enden der Sonotrode jeweils ein Wellenbauch aus.

An einem der stirnseitigen Enden ist der Konverter angeschlossen, der die entsprechende Ultraschallanregungsfrequenz erzeugt. Gegebenenfalls ist zwischen Konverter und Sonotrode ein Amplitudentransformator (Booster) angeschlossen, der die Amplitude der Ultraschallschwingung, nicht aber die Frequenz verändert. Durch das Vorsehen eines Boosters wird die Eigenfrequenz der Sonotrode und damit die Lage der Schwingungsknoten der Longitudinalschwingung nicht beeinflusst.

Für manche Anwendungsfälle sind das Amplitudentransformationsstück und die Sonotrode einstückig ausgebildet, d.h. optisch nicht mehr zu unterscheiden. Um daher die Sonotrode vom Amplitudentransformationsstück zu unterscheiden, ist es notwendig, die Lage der Schwingungsbäuche der reinen Longitudinalschwingung zu bestimmen. Die Sonotrode umfasst in der Regel die Siegelfläche. Jeder Abschnitt, der in Längsrichtung von Schwingungsmaximum zu Schwingungsmaximum reicht und der die Eigenfrequenz der reinen Longitudinalschwingung nicht beeinflusst, ist nicht Teil der Sonotrode. Beeinflusst hingegen ein solcher Abschnitt die Eigenfrequenz der reinen Longitudinalschwingung, d.h. kann er nicht ohne wesentliche Änderung der Eigenfrequenz entfernt werden, so gehört er zur Sonotrode.

Bei der Bearbeitung von Materialien mit Hilfe von Ultraschall wird im allgemeinen das zu bearbeitende Material zwischen der Sonotrode und einem (nicht zum Schwingungsgebilde gehörenden) Gegenwerkzeug, welches auch Amboss genannt wird, positioniert. Die mit dem zu bearbeitenden Material in Kontakt stehende Sonotrode überträgt dann die Ultraschallenergie auf das zu bearbeitende Material, welches dadurch beispielsweise verschweisst oder abgetrennt wird. Die zum Plastifizieren der Materialbahn benötigte Wärme wird durch die Umwandlung von Ultraschallschwingungen in Reibungsenergie erzeugt. Aufgrund der Grenzflächen- und Molekularreibung entsteht somit Wärme, die den Kunststoff anschmelzen lässt.

Bei den meisten Sonotroden wird die longitudinale Ultraschallschwingung zum Energieübertrag über die Siegelfläche genutzt.

Es gibt jedoch auch Sonotroden mit einer im wesentlichen zylindermantelflächenförmigen Siegelfläche, welche die sich quer zur longitudinalen Ausbreitungsrichtung der Ultraschallschwingung ausbildende Radialultraschallschwingung zum Energieübertrag nutzen. Diese Sonotroden bestehen häufig aus einem im wesentlichen stabförmigem Abschnitt, an den sich Konverter und gegebenenfalls Booster anschliessen, und einem radial über den stabförmigen Abschnitt vorstehenden radförmigen oder glockenförmige Abschnitt. Der rad- oder glockenförmige Abschnitt weist die Siegelfläche auf

Diese Sonotroden weisen im allgemeinen zwei Haupteigenschwingungsmoden auf.

Die eine Eigenschwingungsmode entspricht im wesentlichen der longitudinalen Resonanzschwingung des stabförmigen Abschnitts. Diese Resonanzschwingung hat eine relativ grosse Longitudinalschwingungsamplitude. Damit verbunden ist jedoch auch eine erzwungene Beeinflussung des Materials in Transversalrichtung, d.h. senkrecht zur Stabachse. Diese erzwungene Beeinflussung äussert sich in einer Dickenschwingung, die sich radial zur Stabachse ausbreitet. Die Schwingungsamplitude der Dickenschwingung ist relativ klein, was zur Folge hat, dass der Grossteil (mehr als 90%) der im Schwingungssystem aufgenommenen Schwingungsenergie in der Longitudinalschwingung enthalten ist.

Die andere Eigenschwingungsmode entspricht im wesentlichen der Resonanz der Radialschwingung des Radabschnitts. Damit verbunden ist eine vergleichsweise kleine (erzwungene) Schwingung in longitudinaler Richtung. In dieser Eigenschwingungsmode ist der Grossteil (meist mehr als 90%) der im Schwingungssystem aufgenommenen Schwingungsenergie in der Radialschwingung enthalten.

Beim Rotationsschweissen wird die zweite Eigenschwingungsmode verwendet, da durch Erzeugen einer relativ kleinen Longitudinalschwingung im stabförmigen Abschnitt der Sonotrode eine relativ grosse Radialschwingung im Radabschnitt der Sonotrode erzeugt werden kann.

So sind Sonotroden mit zylinderflächenförmiger Siegelfläche bekannt, die zum kontinuierlichen Ultraschallbearbeiten von bewegten Materialbahnen eingesetzt werden. Diese Sonotroden werden im Betrieb um ihre Längsachse rotiert, so dass sich die zylinderflächenförmige Siegelfläche im wesentlichen mit der gleichen Geschwindigkeit bewegt, wie die zu bearbeitende Materialbahn. Somit ist bei diesen Sonotroden immer nur ein kleiner Teil der Siegelfläche mit der Materialbahn in Kontakt.

Eine Ultraschallschweissvorrichtung der eingangs genannten Art ist aus WO 2007/012917 A1 bekannt. Die mehrflügelig ausgeführte Vorrichtung besteht aus zwei rotierenden, parallel zueinander stehenden Wellen. Auf der einen Welle sind die Sonotroden, auf der anderen Welle die Ambosse montiert. Die zur Speisung der Sonotroden dienenden Konverter sind ebenfalls auf der rotierenden Welle platziert. Nachteilig bei dieser Vorrichtung ist, dass für jede Sonotrode ein Konverter benötigt wird. Bei einer z.B. 4-flügeligen Ausführung sind somit vier Konverter notwendig, was hohe Kosten verursacht. Konverter und Sonotrode haben eine relativ grosse Bauhöhe. Damit muss der Achsabstand der beiden parallelen Wellen gross gewählt werden, was viel Platz benötigt und sich nachteilig auf den Formatbereich auswirkt. Beim Formatwechsel von z.B. 3- auf 4-flügelig ist ein aufwendiger Umbau mit anschliessender schwieriger Justage notwendig, was grössere Stillstand- und längere Startupzeiten nach dem Formatwechsel zur Folge hat.

WO 2009/156207 A1 offenbart eine rotierende Sonotrode, welche eine walzenartige Wirkfläche (Siegelfläche) hat. Die Sonotrode ist wellenförmig ausgebildet und optional mit Boostern versehen. Die Siegelflächen sind als radiale Erhöhungen in Rad- oder Glockenform ausgebildet. Die Sonotrode wird axial durch einen Konverter mit Ultraschallenergie versorgt. Die wellenförmig ausgebildete Sonotrode ist als Einheit ausgeführt und muss als solche bezüglich ihrer Schwingungseigenschaften als Gesamtsystem ausgelegt werden. Werden nun bei einer Sonotrode für eine Schlauchbeutelmaschine anstelle einer walzenförmigen Siegelfläche sogenannte Flügel ausgebildet, muss auch diese Konfiguration als Gesamtsystem ausgelegt werden. Zudem ergeben sich Einschränkungen hinsichtlich der Anzahl der Flügel. So muss z. B. das System symmetrisch gebaut sein, was nur eine gerade Anzahl von Flügeln erlaubt. Ein Wechsel der Sonotrode aufgrund von Wartungsarbeiten oder auch beim Ersteinbau ist nur insgesamt möglich und damit aufwändig. Auch das Verändern der Anzahl Flügel aufgrund von Formatverstellung macht einen Ausbau der gesamten Sonotrode mit anschliessender aufwändiger Justage notwendig.

Aus WO 02/060674 A1 ist es bekannt, bei einer rotierenden Sonotrode die Ultraschallenergie axial von beiden Seiten einzuspeisen. Aufgrund der konischen Form und eines entsprechenden Hohlraumes in der Sonotrode wird die Schwingung um 90° in die radiale Richtung umgelenkt. Der Vorteil dieser Sonotrode ist die Möglichkeit einer zweiseitigen Lagerung, wodurch ein höherer Siegeldruck erzeugt werden kann. Ebenfalls kann die Verteilung der Schwingung auf der Siegelfläche gleichmässiger ausgeführt werden, im Vergleich zur herkömmlichen Umwandlung der axialen in radiale Schwingungsenergie mittels Querkontraktion. Aufgrund des Hohlraumes sind nur zylindrische Formen für die Sonotrode möglich. Sonotroden mit mehreren Flügeln, wie sie für eine Schlauchbeutelmaschine benötigt werden, sind aufgrund der die Stabilität der Sonotrode einschränkenden, zur Umlenkung der Wellen notwendigen dünnen, konischen Wände nicht realisierbar. Ein weiterer Nachteil ist die eingeschränkte Siegelbreite und Energieverteilung auf der Wirkfläche. Dadurch ergibt sich ein eingeschränkter Formatbereich und auch eine ungenügende Siegelqualität bei breiten Siegelnähten.

US 2002/0189206 zeigt die Anwendung von Sonotroden für die Herstellung von Siegelnähten.

### DARSTELLUNG DER ERFINDUNG

Der Erfindung liegt die Aufgabe zugrunde, eine Ultraschallschwingeinheit der eingangs genannten Art zu schaffen, welche eine kleine Bauform mit möglichst grosser Siegelfläche bei gleichmässiger Energieverteilung über die Siegelfläche aufweist.

Zur erfindungsgemässen Lösung der Aufgabe führt, dass die Sonotrode eine Sonotrodenwelle mit der Rotationsachse, Siegelhörner und Boostern umfasst, wobei eine oder beide Stirnseiten der Sonotrodenwelle mit einem Konverter verbunden und die Siegelhörner bei Schwingungsknoten einer Longitudinalschwingung an der Sonotrodenwelle über Booster auf der Sonotrodenwelle befestigt sind.

Durch die erfindungsgemässe Ausgestaltung der Ultraschallschwingeinheit sind mehrflügelige Ausführungen mit freier Wahl der Anzahl Flügel (Siegelhörner) möglich. Damit ist unter Vermeidung der Nachteile der bekannten Lösungen eine grösstmögliche Flexibilität und ein hoher Leistungsbereich gewährleistet. Ebenfalls kann ein einfacher Austausch der Siegelhörner bei möglichst kurzer Maschinenstillstandzeit und einfacher Justage erreicht werden.

Die erfindungsgemässe Ultraschallschwingeinheit eignet sich insbesondere zum Herstellen von Quersiegelnähten an einer schlauchförmigen Verpackungsfolie in einer vertikalen- oder horizontalen Schlauchbeutelmaschine,

Im Folgenden wird der Begriff Sonotrode als Komposition der Sonotrodenwelle, der optionalen Booster und der Siegelhörner verwendet, wobei in der Sonotrodenwelle und in den Siegelhörner separate Schwingungswellen erzeugt werden und die Siegelfläche nur an den Siegelhörnern vorhanden ist. Demgegenüber umfasst eine herkömmliche Sonotrode in der Regel nur eine Schwingungswelle und beinhaltet die Siegelfläche.

Die Ultraschallschwingeinheit weist eine Vielzahl von radial von der Rotationsachse abragend befestigten Siegelhörnern -- auch Flügel genannt -- auf. Die Befestigung kann durch verschiedene Techniken ausgeführt sein. Siegelhörner mit grosser Breite können auch bei verschiedenen Schwingungsknoten radial von der Rotationsachse abragend befestigt sein.

Jedes Siegelhorn kann einen einzigen Befestigungspunkt aufweisen. Eine Vielzahl von Siegelhörnern können bei ein und demselben Schwingungsknoten oder bei unterschiedlichen Schwingungsknoten -- also in Richtung der Rotationsachse seitlich gegeneinander versetzt -- radial von der Rotationsachse abragend angeordnet sein.

Jedes Siegelhorn kann wenigstens zwei Befestigungspunkte aufweisen, wobei der Abstand der Befestigungspunkte bevorzugt jeweils ein Vielfaches der Wellenlänge der Longitudinalschwingung beträgt. Eine Vielzahl von Siegelhörnern können bei denselben oder bei unterschiedlichen Schwingungsknoten -- also in Richtung der Rotationsachse seitlich gegeneinander versetzt -- radial von der Rotationsachse abragend angeordnet sein.

### KURZE BESCHREIBUNG DER ZEICHNUNGEN

Weitere Vorteile, Merkmale und Einzelheiten der Erfindung ergeben sich aus der nachfolgenden Beschreibung bevorzugter Ausführungsbeispiele sowie anhand der Zeichnung, die lediglich zur Erläuterung dient und nicht einschränkend auszulegen ist. Die Zeichnung zeigt schematisch in
- Fig. 1: eine Schrägsicht auf eine Ultraschallschwingeinheit;
- Fig. 2: eine Seitenansicht der Ultraschallschwingeinheit von Fig. 1.

### BESCHREIBUNG BEVORZUGTER AUSFÜHRUNGSFORMEN

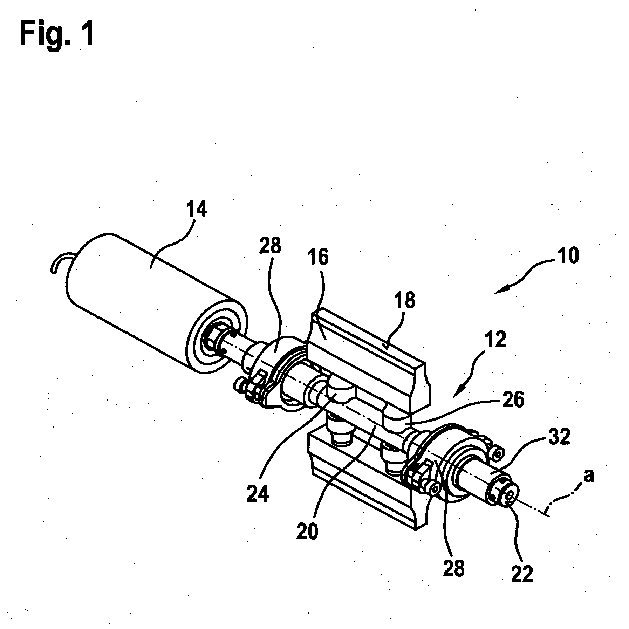

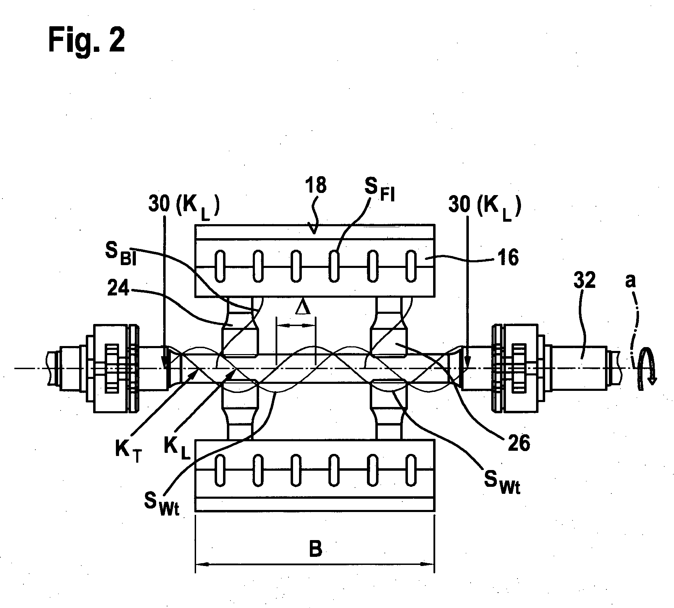

Eine in den Figuren 1 und 2 dargestellte Ultraschallschwingeinheit 10 für eine Ultraschallschweissvorrichtung zum Herstellen von Quersiegelnähten an einer schlauchförmigen Verpackungsfolie in einer Schlauchbeutelmaschine umfasst eine Sonotrode 12 mit einer um eine Rotationsachse a drehbare Sonotrodenwelle 20, deren eine Stirnseite 22 mit einem Konverter 14 axial verbunden ist. Es sei hier angemerkt, dass beide Stirnseiten 22 der Sonotrodenwelle 20 mit je einem Konverter 14 verbunden sein können, d.h., die Ultraschallenergie kann gleichzeitig von beiden Seiten in die Sonotrodenwelle 20 eingeleitet werden. Die Sonotrodenwelle 20 wird in beidseits der Sonotrodenwelle 20 angeordneten Lagern 28 um die Rotationsachse a drehbar gelagert und mit einem in der Zeichnung nicht wiedergegebenen Antrieb verbunden. Auf der Sonotrodenwelle 20 sind zwei Siegelhörner 16 einer Breite B mit endständiger Siegelfläche 18 über je zwei Booster 24, 26 befestigt. Booster 24, 26 und Siegelhörner 16 ragen radial von der Rotationsachse a ab, die Siegelflächen 18 liegen parallel zur Rotationsachse a.

In Fig. 2 sind die in der Sonotrodenwelle 20 auftretenden, longitudinalen (in Richtung der Rotationsachse a verlaufenden) und transversalen (senkrecht zur Richtung der Rotationsachse a verlaufenden) Schwingungen eingezeichnet. Ebenfalls eingezeichnet sind die in den Boostern 24, 26 und im Siegelhorn (Flügel) 16 erzeugten Schwingungen.

Die folgenden Bezeichnungen für die Schwingungen werden verwendet:
- S_{Wl}: Longitudinalschwingung in der Sonotrodenwelle 20
- S_{Wt}: Transversalschwingung in der Sonotrodenwelle 20
- S_{Bl}: Longitudinalschwingung in den Boostern 24, 26
- S_{Fl}: Longitudinalschwingung im Flügel 16
- K_{L}: Schwingungsknoten der Longitudinalwelle in der Sonotrodenwelle 20
- K_{T}: Schwingungsknoten der Transversalwelle in der Sonotrodenwelle 20

Nachfolgend wird anhand der Figuren 1 und 2 die Funktionsweise der Ultraschallschwingeinheit 10 näher erläutert.

Über den Konverter 14 wird eine longitudinale Schwingung S_{Wl} in Richtung der Rotationsachse a der Sonotrodenwelle 20 angeregt und in Betrieb gehalten. Die longitudinale Schwingung S_{Wl} erzeugt eine stehende Longitudinalwelle, die zu definierten Schwingungsknoten K_{L} der Longitudinalwelle führt. Eine longitudinale Schwingung hat zur Folge, dass sich Material in der Länge dehnt und staucht. Bei Stauchung des Materials wird die Sonotrodenwelle 20 an der gestauchten Stelle dicker, bei Dehnung wird sie an der gedehnten Stelle dünner. Diese Dickenschwankung führt zu einer transversalen Schwingung S_{Wt}, die eine Transversalwelle mit definierten Schwingungsknoten K_{T} erzeugt. Die Transversalwelle hat eine Phasenverschiebung Δ zur Longitudinalwelle.

Die beidseitige Befestigung der Sonotrodenwelle 20 an einem Maschinenständer wird auf bekannte Weise in Schwingungsknoten K_{L} der Longitudinalwelle realisiert. Als Befestigungsteile 32 sind z. B. Hülsen geeignet. Zwischen diesen beiden Befestigungspunkten 30 sind mindestens drei weitere Schwingungsknoten K_{L} erforderlich. In diesen Schwingungsknoten K_{L} ist die longitudinale Verschiebung gleich Null und die Dickenschwankung am grössten. Die Dickenschwankung wird als Aktor für ein oder mehrere Siegelhörner 16 genutzt, wobei zur Verstärkung Booster 24, 26 dazwischen geschaltet sein können. Die Booster 24, 26 oder die Siegelhörner 16 werden jeweils an denjenigen Schwingungsknoten K_{L} befestigt, welche synchron in der Dicke zu und abnehmen. Es bildet sich im Siegelhorn 16 mit oder ohne Booster 24, 26 eine neue stehende longitudinale Schwingung S_{Fl} aus, welche senkrecht zur longitudinalen Schwingung S_{Wl} der Sonotrodenwelle 20 ist. Auch in den Boostern 24, 26 bildet sich eine neue stehende longitudinale Schwingung S_{Bl} aus, welche senkrecht zur longitudinalen Schwingung S_{Wl} der Sonotrodenwelle 20 ist.

Jedes Siegelhorn 16 mit einem oder mehreren Boostern 24, 26 kann in ihrer Form unabhängig von der Sonotrodenwelle 20 ausgebildet sein. Damit ist es möglich, auf der Siegelfläche 18 eine gleichmässige Amplitudenverteilung zu erzeugen, was zu einer höheren Qualität der Siegelnaht führt. Ebenfalls kann damit eine breitere Siegelfläche der Quersiegelnaht erzeugt werden.

Über den Umfang der Sonotrodenwelle 20 sind mehrere Siegelhörner 16 -- mit Booster 24, 26 -- montiert, welche unabhängig voneinander einzeln in ihrer Form ausgebildet sein können. Dadurch kann im Gegensatz zu herkömmlichen rotierenden Sonotroden eine beliebige Anzahl von Siegelhörnern 16 mit Booster 24, 26 an der Sonotrodenwelle 20 montiert sein, eingeschränkt nur durch den zur Verfügung stehenden Platz.

## Patentansprüche

1. Ultraschallschwingeinheit für eine Ultraschallschweissvorrichtung zum Siegeln und Schweissen von Materialbahnen, mit einer mit einem Konverter (14) verbundenen Sonotrode (12) mit wenigstens zwei radial von einer Rotationsachse (a) abragenden, um die Rotationsachse (a) drehbaren Siegelhörnern (16) mit einem eine Siegelfläche (18) bildenden freien Ende,
wobei die Sonotrode (12) eine Sonotrodenwelle (20) mit der Rotationsachse (a) umfasst, wobei eine oder beide Stirnseiten (22) der Sonotrodenwelle (20) mit einem Konverter (14) verbunden und, **dadurch gekennzeichnet, dass** die Siegelhörner (16) bei Schwingungsknoten (K_{L}) einer Longitudinalschwingung (S_{Wl}) in der Sonotrodenwelle (20) über Booster (24, 26) auf der Sonotrodenwelle (20) befestigt sind, und dass die Booster (24, 26) und die Siegelhörner (16) radial von der Rotationsachse (a) abragen.

2. Ultraschallschwingeinheit nach Anspruch 1, **dadurch gekennzeichnet, dass** die Siegelflächen (18) parallel zur Rotationsachse (a) liegen.

3. Ultraschallschwingeinheit nach Anspruch 1, **dadurch gekennzeichnet, dass** jedes Siegelhorn (16) einen einzigen Befestigungspunkt aufweist.

4. Ultraschallschwingeinheit nach Anspruch 3, **dadurch gekennzeichnet, dass** eine Vielzahl von Siegelhörnern (16) bei ein und demselben Schwingungsknoten (K_{L}) radial von der Rotationsachse (a) abragend angeordnet sind.

5. Ultraschallschwingeinheit nach Anspruch 3, **dadurch gekennzeichnet, dass** eine Vielzahl von Siegelhörnern (16) bei unterschiedlichen Schwingungsknoten (K_{L}) radial von der Rotationsachse (a) abragend angeordnet sind.

6. Ultraschallschwingeinheit nach einem der Ansprüche 1 oder 2, **dadurch gekennzeichnet, dass** jedes Siegelhorn (16) wenigstens zwei Befestigungspunkte aufweist, wobei der Abstand der Befestigungspunkte jeweils ein Vielfaches der Wellenlänge der Longitudinalschwingung (S_{Wl}) beträgt.

7. Ultraschallschwingeinheit nach Anspruch 6, **dadurch gekennzeichnet, dass** eine Vielzahl von Siegelhörnern (16) bei denselben Schwingungsknoten (K_{L}) radial von der Rotationsachse (a) abragend angeordnet sind.

8. Ultraschallschwingeinheit nach Anspruch 6, **dadurch gekennzeichnet, dass** eine Vielzahl von Siegelhörnern (16) bei unterschiedlichen Schwingungsknoten (K_{L}) radial von der Rotationsachse (a) abragend angeordnet sind.

## Claims

1. Ultrasonic vibration unit for an ultrasonic welding device for sealing and welding material webs, comprising a sonotrode (12) connected to a converter (14) and having at least two sealing horns (16) protruding radially from an axis of rotation (a) and rotatable about the axis of rotation (a) and having a free end forming a sealing surface (18),
wherein the sonotrode (12) comprises a sonotrode shaft (20) with the axis of rotation (a), one or both ends (22) of the sonotrode shaft (20) being connected to a converter (14) and **characterized in that** the sealing horns (16) are fixed to the sonotrode shaft (20) at vibration nodes (K_{L}) of a longitudinal vibration (S_{Wl}) in the sonotrode shaft (20) via boosters (24, 26), and **in that** the boosters (24, 26) and the sealing horns (16) project radially from the axis of rotation (a).

2. Ultrasonic vibration unit according to Claim 1, **characterized in that** the sealing surfaces (18) lie parallel to the axis of rotation (a).

3. Ultrasonic vibration unit according to Claim 1, **characterized in that** each sealing horn (16) has an individual fixing point.

4. Ultrasonic vibration unit according to Claim 3, **characterized in that** a multiplicity of sealing horns (16) are arranged so as to project radially from the axis of rotation (a) at one and the same vibration node (K_{L}).

5. Ultrasonic vibration unit according to Claim 3, **characterized in that** a multiplicity of sealing horns (16) are arranged to project radially from the axis of rotation (a) at different vibration nodes (K_{L}).

6. Ultrasonic vibration unit according to either of Claims 1 and 2, **characterized in that** each sealing horn (16) has at least two fixing points, the spacing of the fixing points respectively being a multiple of the wavelength of the longitudinal vibration (S_{Wl}).

7. Ultrasonic vibration unit according to Claim 6, **characterized in that** a multiplicity of sealing horns (16) are arranged to project radially from the axis of rotation (a) at the same vibration nodes (K_{L}).

8. Ultrasonic vibration unit according to Claim 6, **characterized in that** a multiplicity of sealing horns (16) are arranged to project radially from the axis of rotation (a) at different vibration nodes (K_{L}).

## Revendications

1. Unité émettant des ultrasons pour ensemble de soudage par ultrasons servant à sceller et souder des nappes de matière, l'unité présentant
une sonotrode (12) reliée à un convertisseur (14) et présentant au moins deux cornes de scellement (16) débordant radialement d'un axe de rotation (a), aptes à tourner autour de l'axe de rotation (a) et dotées d'une extrémité libre qui forme une surface de scellement (18),
la sonotrode (12) comportant un arbre (20) de sonotrode qui présente l'axe de rotation (a),
un côté frontal ou les deux côtés frontaux (22) de l'arbre (20) de sonotrode étant relié à un convertisseur (14),
**caractérisée en ce que**
en cas de noeuds de vibration (K_{L}) d'une vibration longitudinale (S_{WI}) formée dans l'arbre (20) de sonotrode par l'intermédiaire d'amplificateurs (24, 26), les cornes de scellement (16) sont fixées sur l'arbre (20) de sonotrode et
**en ce que** les amplificateurs (24, 26) et les cornes de scellement (16) débordent radialement de l'axe de rotation (a).

2. Unité émettant des ultrasons selon la revendication 1, **caractérisée en ce que** les surfaces de scellement (18) sont disposées parallèlement à l'axe de rotation (a).

3. Unité émettant des ultrasons selon la revendication 1, **caractérisée en ce que** chaque corne de scellement (16) présente un unique point de fixation.

4. Unité émettant des ultrasons selon la revendication 3, **caractérisée en ce que** dans le cas d'un seul noeud de vibration (K_{L}), plusieurs cornes de scellement (16) sont disposées de manière à déborder radialement de l'axe de rotation (a).

5. Unité émettant des ultrasons selon la revendication 3, **caractérisée en ce que** lorsqu'il existe différents noeuds de vibration (K_{L}), plusieurs cornes de scellement (16) sont disposées de manière à déborder radialement de l'axe de rotation (a).

6. Unité émettant des ultrasons selon l'une des revendications 1 ou 2, **caractérisée en ce que** chaque corne de scellement (16) présente au moins deux points de fixation, la distance entre les points de fixation étant chaque fois un multiple de la longueur d'onde de la vibration longitudinale (S_{WI}).

7. Unité émettant des ultrasons selon la revendication 6, **caractérisée en ce que** dans le cas d'un seul noeud de vibration (K_{L}), plusieurs cornes de scellement (16) sont disposées de manière à déborder radialement de l'axe de rotation (a).

8. Unité émettant des ultrasons selon la revendication 6, caractérisée en ce lorsqu'il existe différents noeuds de vibration (K_{L}), plusieurs cornes de scellement (16) sont disposées de manière à déborder radialement de l'axe de rotation (a).
